# EUROPÄISCHE PATENTSCHRIFT

(11) **EP 1 421 308 B1**
(45) Veröffentlichungstag und Bekanntmachung des Hinweises auf die Patenterteilung: **21.12.2005**
(21) Anmeldenummer: 02769899.2
(22) Anmeldetag: 29.08.2002
(51) Int. Cl.: F16K 15/04, F04B 53/10, F04B 1/04

(54) **RÜCKSCHLAGVENTIL FÜR EINE PUMPE**
NON-RETURN VALVE FOR A PUMP
CLAPET ANTI-RETOUR DE POMPE

(30) Priorität: 31.08.2001 DE 10142609
(43) Veröffentlichungstag der Anmeldung: 26.05.2004
(73) Patentinhaber: SIEMENS AKTIENGESELLSCHAFT, 80333 München (DE)
(72) Erfinder: HOHMANN, Marc, 97828 Marktheidenfeld (DE)
(86) Internationale Anmeldenummer: PCT/DE2002/003166
(87) Internationale Veröffentlichungsnummer: WO 2003/025441

(56) Entgegenhaltungen:
- GB-A- 409 028
- GB-A- 744 858
- US-A- 3 584 644
- US-A- 4 391 283
- US-A- 5 507 312

## Beschreibung

Die vorliegende Erfindung betrifft ein Rückschlagventil für eine Pumpe und insbesondere ein Hochdruckrückschlagventil für einen Kraftstoffpumpe eines Speichereinspritzsystems, umfassend eine Aufnahme, in welcher ein Ventilsitz ausgebildet ist, einen Schließkörper und ein Käfigelement, in welchem der Schließkörper angeordnet ist, wobei das Käfigelement zweiteilig aus einem Führungs- und einem Anschlagelement gebildet ist.

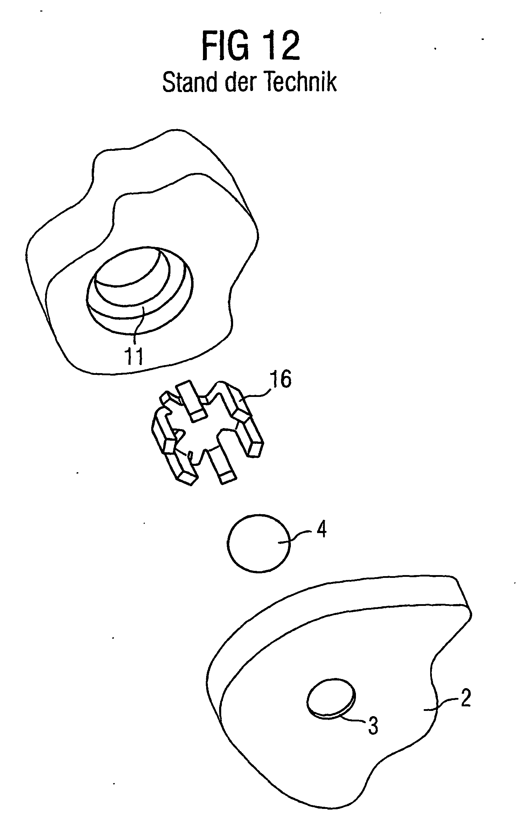

Rückschlagventile für Pumpen sind in unterschiedlichen Ausgestaltungen bekannt. Ein Beispiel für ein bekanntes Rückschlagventil ist in Figur 12 dargestellt. Wie in Figur 12 gezeigt, umfasst das Rückschlagventil eine einen Ventilsitz 3 aufweisende Aufnahme 2, einen Schließkörper 4 und ein Käfigelement 16. Der Schließkörper 4 ist im Inneren des krallenförmigen Käfigelements 16 angeordnet und kann sich in axialer Richtung im Rückschlagventil bewegen. Der Schließkörper 4 kann dabei zwei Positionen einnehmen, nämlich eine erste Position, in welcher er auf dem Ventilsitz 3 anliegt und somit eine Strömung von Fluid unterbindet und eine zweite Position, in welcher er am Bodenbereich (Anschlagbereich) des Käfigelements 16 anliegt und eine Durchströmung des Ventils in axialer Richtung durch die Aussparungen zwischen den einzelnen Führungsbereichen des Käfigelements ermöglicht. Das Käfigelement 16 liegt weiterhin an einer Gegenfläche 11 an.

Bei den bekannten Rückschlagventilen vereint das Käfigelement die Funktion der Schließkörperführung, der Überströmung des Ventils und des Anschlags für den Schließkörper in einem Bauteil. Derartige Käfigelemente werden beispielsweise mittels Stanzen und anschließendem Tiefziehen oder mittels Drehen hergestellt. Aufgrund der Biegeradien zwischen dem Anschlagbereich und den Führungsbereichen treten insbesondere bei einem Einsatz bei Hochdruckpumpen für Speichereinspritzsysteme bei erhöhten Drehzahlen aufgrund der hohen Drücke vermehrt Brüche auf.

Aus der US-A-3 584 644 ist ein gattungsgemäßes Rückschlagventil mit einem Käfigelement bekannt, welches zweiteilig aus einem Käfigelement bekannt, welches zweiteilig aus einem Führungselement und einem Anschlagelement gebildet ist.

Es ist daher Aufgabe der vorliegenden Erfindung, ein Rückschlagventil insbesondere für Kraftstoffpumpen für Speichereinspritzsysteme bereitzustellen, welches bei einfachem Aufbau und einfacher, kostengünstiger Herstellbarkeit auch bei hohen Beanspruchungen eine lange Lebensdauer aufweist.

Diese Aufgabe wird durch ein Rückschlagventil mit den Merkmalen des Patentanspruchs 1 gelöst. Vorteilhafte Weiterbildungen sind Gegenstand der Unteransprüche.

Das erfindungsgemäße Rückschlagventil für eine Pumpe, insbesondere eine Hochdruckkraftstoffpumpe, mit den Merkmalen des Patentanspruchs 1 kann sowohl die Anforderungen hinsichtlich einer Hubbegrenzung für den Schließkörper als auch enge Toleranzen für die Führung des Schließkörpers bereitstellen. Dabei ist das Käfigelement des Rückschlagventils erfindungsgemäß zweiteilig aus einem Führungselement und einem Anschlagelement ausgebildet, wobei das Führungselement aus einem Werkstoff hergestellt ist, welcher ein kleineres E-Modul als ein Werkstoff des Anschlagelements aufweist. Dadurch kann sowohl das Anschlagelement hinsichtlich der beim Öffnen des Ventils auftretenden Stoßkräfte durch den Schließkörper optimiert werden, als auch das Führungselement hinsichtlich der Führung des Schließkörpers zwischen seiner Öffnungs- und seiner Schließposition optimiert werden. Das Führungselement wird somit nicht durch den Öffnungsimpuls, welcher auf das Anschlagelement durch den Schließkörper wirkt, belastet. Daher kann das erfindungsgemäße Rückschlagventil eine verbesserte Lebensdauer aufweisen. Somit wird durch die zweiteilige Ausbildung des Käfigelements eine Aufteilung der Übernahme verschiedener Funktionen des Käfigelements erreicht, so dass die einzelnen Bauteile des Käfigelements hinsichtlich ihrer Anforderungen optimiert werden können. Daher können durch das erfindungsgemäße Hochdruckrückschlagventil die im Stand der Technik auftretenden Probleme insbesondere bei hohen Drehzahlen der Pumpe und hohen Drücken vermieden werden.

Bevorzugt ist das Führungselement aus Kunststoff oder Aluminium und das Anschlagelement aus Stahl,z.B. Vergütungs- oder Einsatzstahl, hergestellt. Durch die Herstellung aus Kunststoff kann das Führungselement beispielsweise spritzgegossen werden und damit sehr enge Toleranzen hinsichtlich einer Führung des Schließkörpers aufweisen, ohne dass am Führungselement eine spanende Nachbearbeitung notwendig wäre. Durch diese bessere Führung des Schließkörpers kann insbesondere ein genaueres Aufsetzen auf dem Dichtkonus des Ventils erreicht werden. Die Materialwahl für das Führungselement erfolgt dabei vorzugsweise hinsichtlich einer leichten Einpressbarkeit in ein Gehäuse o.Ä., und hinsichtlich eines hohen Gleitverschleißwiderstands. Die Materialwahl des Anschlagselements erfolgt vorzugsweise hinsichtlich eines hohen Prallverschleißwiderstands und einer hohen Wechselfestigkeit.

Um ein besonders kompaktes und langlebiges Käfigelement zu erhalten, ist das Führungselement vorzugsweise als Buchse ausgebildet und weist an seinem Innenumfang wenigstens einen Überströmkanal auf.

Um eine Vormontierbarkeit des Käfigelements zu ermöglichen, sind das Führungselement und das Anschlagselement vorzugsweise mittels Einpressen miteinander verbunden.

Um eine punktförmige Belastung am Anschlagelement zu verhindern, weist das Anschlagelement vorzugsweise eine Kalotte auf. Dabei wird durch die hohe Führungsgenauigkeit des Führungselements insbesondere auch ein genaues Aufsetzen des Schließkörpers auf die Kalotte erreicht.

Vorteilhaft weist das Anschlagelement zwei, drei oder vier Verbindungsbereiche mit dem Führungselement auf. Dadurch kann das Anschlagelement beispielsweise als einfaches Stabelement, als sternförmiges Element oder als kreuzförmiges Element ausgebildet sein.

Vorzugsweise grenzt das Anschlagelement im montierten Zustand an eine Gegenfläche an, welche an einem Gehäuse des Ventils gebildet ist. Dadurch kann das erfindungsgemäße Ventil als vollständig vormontierte Baueinheit gefertigt werden. Es ist jedoch auch möglich, dass die Gegenfläche unmittelbar durch einen Absatz in der Fluidleitung, in welcher das Ventil angeordnet ist, gebildet ist.

Um eine besonders einfache Montage zu ermöglichen, sind am Führungselement vorzugsweise Nuten ausgebildet, in welche die Verbindungsbereiche des Anschlagselements aufgenommen werden. Dabei kann das Anschlagselement beispielsweise mittels Einpressen oder mittels Kleben eingefügt werden. Weiterhin ist es möglich, dass das Anschlagselement z.B. bei der Herstellung mittels Spritzgießen auch in das Führungselement eingespritzt wird.

Besonders bevorzugt sind dabei in den Nuten zur Aufnahme des Anschlagelements Aussparungen gebildet, welche einen Druckausgleich sicherstellen.

Das erfindungsgemäße Rückschlagventil wird insbesondere bei Hochdruckkraftstoffpumpen verwendet, bei denen sehr hohe Anforderungen aufgrund der hohen Drücke an die einzelnen Bauteile zu stellen sind. Das erfindungsgemäße Rückschlagventil kann diese hohen Anforderungen erfüllen und weist bei einfacher, kostengünstiger Herstellbarkeit und Montage eine lange Lebensdauer auf.

Nachfolgend wird die Erfindung anhand bevorzugter Ausführungsbeispiele in Verbindung mit der Zeichnung näher erläutert. In der Zeichnung ist:
- Figur 1: eine perspektivische Explosionsdarstellung eines Rückschlagventils gemäß einem ersten Ausführungsbeispiel der vorliegenden Erfindung;
- Figur 2: eine perspektivische Explosionsdarstellung aus einer anderen Richtung des in Figur 1 gezeigten Rückschlagventils;
- Figur 3: eine Schnittansicht des in den Fig. 1 und 2 gezeigten Rückschlagventils im montierten Zustand;
- Figur 4a: eine Ansicht von unten des Führungselements des Rückschlagventils des ersten Ausführungsbeispiels;
- Figur 4b: eine Seitenansicht des in Figur 4a gezeigten Führungselements;
- Figur 5a: eine Ansicht von unten des Anschlagelements gemäß dem ersten Ausführungsbeispiel;
- Figur 5b: eine Seitenansicht des in Figur 5a gezeigten Anschlagelements;
- Figur 6: eine Ansicht von unten eines Führungselements gemäß einem zweiten Ausführungsbeispiel der vorliegenden Erfindung;
- Figur 7: eine Ansicht von unten eines Führungselements gemäß einem dritten Ausführungsbeispiel der vorliegenden Erfindung;
- Figur 8: eine Draufsicht eines Führungselements gemäß einem vierten Ausführungsbeispiel der vorliegenden Erfindung;
- Figur 9: eine Ansicht von unten eines Anschlagselements für das in Figur 8 gezeigte Führungselement;
- Figur 10: eine Draufsicht eines Führungselements gemäß einem fünften Ausführungsbeispiel der vorliegenden Erfindung;
- Figur 11: eine Ansicht von unten eines Anschlagelements für das in Figur 10 gezeigte Führungselement; und
- Figur 12: eine perspektivische Explosionsdarstellung eines Rückschlagventils gemäß dem Stand der Technik.

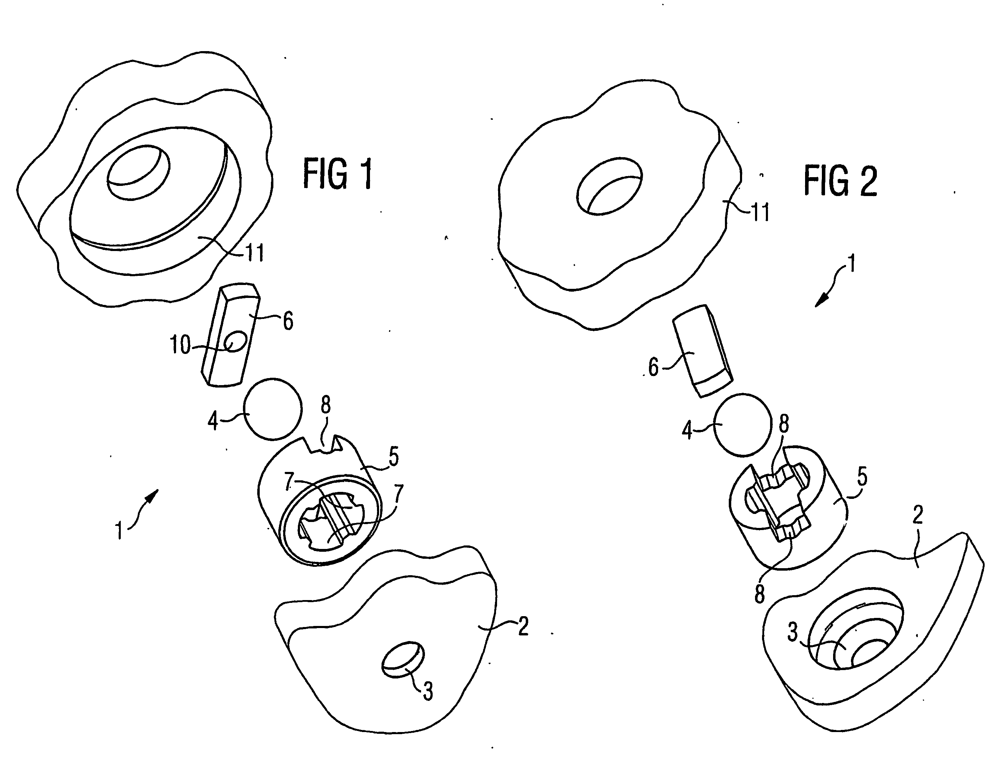

Nachfolgend wird unter Bezugnahme auf die Figuren 1 bis 5b ein Rückschlagventil gemäß einem ersten Ausführungsbeispiel der vorliegenden Erfindung beschrieben.

Wie in den Figuren 1 und 2 gezeigt, umfasst das erfindungsgemäße Hochdruckrückschlagventil 1 gemäß dem ersten Ausführungsbeispiel eine Aufnahme 2, in welcher am Ende einer Leitung 12 ein Ventilsitz 3 ausgebildet ist. Wie in Figur 2 gezeigt, ist der Ventilsitze 3 als Dichtkonus ausgebildet. Weiter umfasst das Ventil 1 ein zweiteiliges Käfigelement, welches aus einem Führungselement 5 und einem Anschlagelement 6 besteht. Das Anschlagelement 6 ist in Nuten 8 am Führungselement 5 eingefügt.

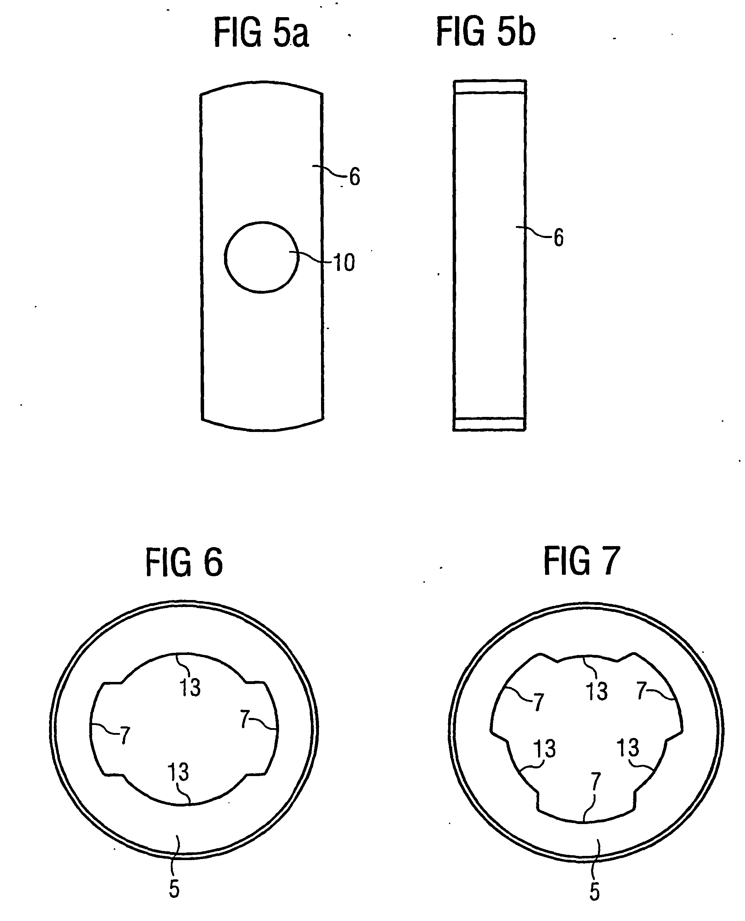

Das Führungselement 5 ist im Wesentlichen zylinderförmig gebildet und weist an seiner Innenseite, wie in Figur 4a gezeigt, vier Überströmkanäle 7 sowie vier Führungsbereiche 13 auf. Die Führungsbereiche 13 dienen dabei zur Führung des als Kugel ausgebildeten Schließkörpers 4. Die Überströmbereiche 7 ermöglichen eine Durchströmung des Rückschlagventils in axialer Richtung. Wie insbesondere aus Figur 1 und 5a ersichtlich ist, ist an der Innenseite des Anschlagelements 6 eine Kalotte 10 ausgebildet. Die Kalotte 10 kann beispielsweise durch eine zylinderförmige Vertiefung im Anschlagelement 6 gebildet sein. Durch die Kalotte 10 wird verhindert, dass beim Öffnen des Ventils 1 nur ein punktförmiger Kontakt zwischen dem Schließkörper 4 und dem Anschlagelement 6 auftritt, welcher zu besonders hohen Belastungen am Anschlagelement 6 führen würde.

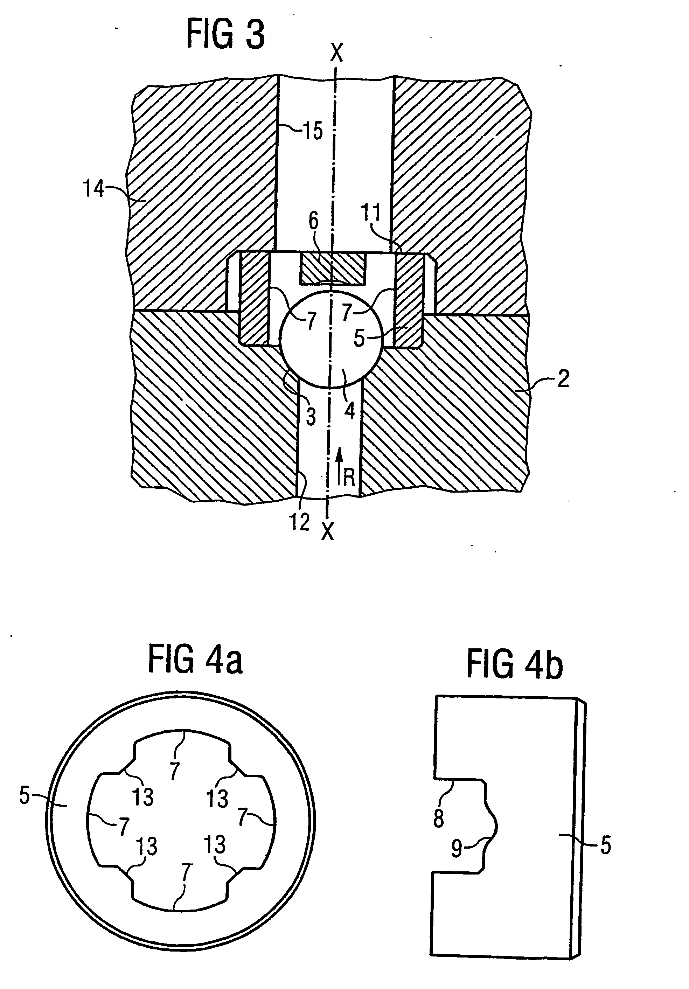

Weiterhin, wie insbesondere aus den Figuren 1 und 3 ersichtlich ist, ist an einem eine Leitung 15 aufweisenden Bauteil 14 ein Absatz ausgebildet, welcher eine Gegenfläche 11 für das Käfigelement bereitstellt.

Wie insbesondere aus Figur 4b ersichtlich ist, ist in den Nuten 8 zur Befestigung des Anschlagelements 6 eine Vertiefung bzw. Aussparung 9 gebildet, welche im montierten Zustand des Anschlagelements 6 am Führungselement 5 einen Druckausgleich zwischen den beiden, teilweise durch das Anschlagelement 6 abgedeckten Überströmkanälen 7 ermöglicht. Dadurch kann insbesondere ein Strömungswiderstand des Rückschlagventils verringert werden.

Das Führungselement 5 und das Anschlagelement 6 sind aus unterschiedlichen Werkstoffen hergestellt. Das Führungselement 5 ist aus Kunststoff hergestellt, so dass für dieses Bauteil keine spanende Bearbeitung notwendig ist. Hierbei können insbesondere enge Toleranzen eingehalten werden, so dass eine im Vergleich mit dem Stand der Technik bessere Führung des Schließkörpers 4 möglich ist. Dadurch kann ein genaueres Aufsetzen auf den Dichtkonus 3 in der Aufnahme 2 beim Schließen des Ventils und auf die Kalotte 10 im Anschlagelement 5 beim Öffnen des Ventils erreicht werden. Das buchsenförmige Führungselement 5 weist eine derartige Höhe auf, dass zwischen den beiden Endpositionen des Schließkörpers eine ständige Führung des Schließkörpers 4 vorhanden ist. Das Anschlagelement 6 ist dabei beispielsweise aus Stahl hergestellt und kann mittels Stanzen sehr kostengünstig hergestellt werden.

Durch die Überströmkanäle 7 kann somit ein ausreichender Volumenstrom durch das Ventil 1 in Axialrichtung X-X des Ventils ermöglicht werden. Die Durchflussrichtung ist in Figur 3 mittels einer Pfeils R bezeichnet.

In Figur 6 ist ein Führungselement gemäß einem zweiten Ausführungsbeispiel der vorliegenden Erfindung dargestellt. Gleiche bzw. funktional gleiche Teile sind dabei mit den gleichen Bezugszeichen wie im ersten Ausführungsbeispiel bezeichnet.

Wie in Figur 6 gezeigt, ist im Unterschied zum Führungselement des ersten Ausführungsbeispiels das Führungselement des zweiten Ausführungsbeispiels mit nur zwei Überströmkanälen 7 versehen. Die Überströmkanäle 7 sind dabei einander gegenüberliegend angeordnet. Weiterhin sind ebenfalls nur zwei Führungsbereiche 13 ausgebildet, welche jedoch jeweils über ungefähr ein Viertel des Innenumfangs am buchsenförmigen Führungselement 5 verlaufen.

In Figur 7 ist ein Führungselement 5 gemäß einem dritten Ausführungsbeispiel der vorliegenden Erfindung gezeigt. Gleiche bzw. funktional gleiche Teile sind wieder mit den gleichen Bezugszeichen wie im ersten Ausführungsbeispiel bezeichnet. Wie in Figur 7 gezeigt, weist das Führungselement 5 gemäß dem dritten Ausführungsbeispiel drei Überströmkanäle 7 sowie drei Führungsbereiche 13 auf. Die Überströmkanäle 7 bzw. Führungsbereiche 13 sind dabei jeweils im gleichen Abstand zueinander angeordnet.

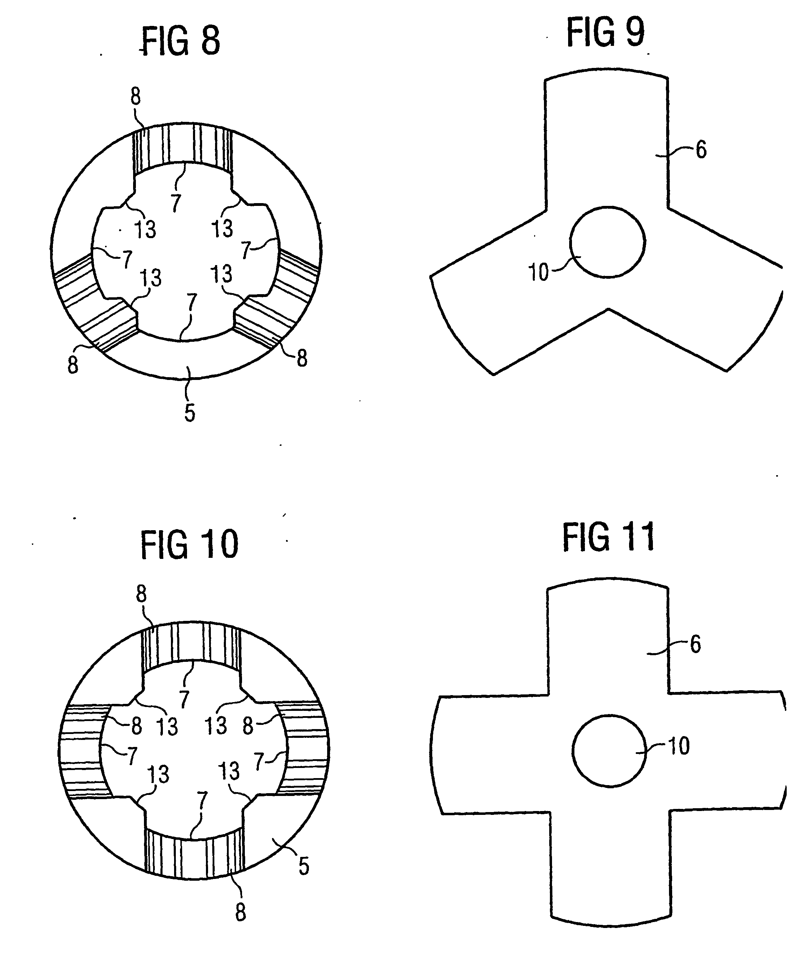

In den Figuren 8 und 9 ist ein Führungselement und ein Anschlagelement gemäß einem vierten Ausführungsbeispiel der vorliegenden Erfindung dargestellt, wobei wieder gleiche Teile mit den gleichen Bezugszeichen versehen sind.

Wie in Figur 8 gezeigt, weist das Führungselement 5 im Gegensatz zum ersten Ausführungsbeispiel drei Nuten 8 auf, in welche ein in Figur 9 gezeigtes, sternförmiges Anschlagelement 6 einpressbar ist. Wie in Figur 9 gezeigt, sind die drei Verbindungsbereiche des Anschlagelements 6 dabei jeweils in gleichem Abstand voneinander von 120° angeordnet. Hierbei ist zwischen dem Anschlagelement 6 und dem Führungselement 5 ein Presssitz vorgesehen.

In den Figuren 10 und 11 ist ein Führungselement und ein Anschlagelement gemäß einem fünften Ausführungsbeispiel der vorliegenden Erfindung dargestellt, wobei gleiche Teile wieder mit den gleichen Bezugszeichen versehen sind.

Im Gegensatz zum vierten Ausführungsbeispiel sind beim fünften Ausführungsbeispiel vier Nuten 8 vorgesehen, so dass auch am Anschlagelement 6 vier Verbindungsbereiche ausgebildet sind. Somit weist das Anschlagelement 6 eine im Wesentlichen kreuzförmige Form auf.

### Bezugszeichenliste

- 1: Ventil
- 2: Aufnahme
- 3: Ventilsitz
- 4: Schließkörper
- 5: Führungselement
- 6: Anschlagelement
- 7: Überströmkanal
- 8: Nut
- 9: Aussparung
- 10: Kalotte
- 11: Gegenfläche
- 12: Leitungsbohrung
- 13: Führungsbereich
- 14: Bauteil
- 15: Leitung
- 16: Käfigelement
- R: Durchflussrichtung
- X-X: Axialrichtung des Ventils

## Patentansprüche

1. Rückschlagventil für eine Pumpe, umfassend eine Aufnahme (2), in welcher ein ventilsitz (3) ausgebildet ist, einen Schließkörper (4) und ein Käfigelement, in welchem der Schließkörper (4) angeordnet ist, wobei das Käfigelement zweiteilig aus einem Führungselement (5) und einem Anschlagelement (6) gebildet ist, **dadurch gekennzeichnet, dass** das Führungselement (5) aus einem Werkstoff hergestellt ist, welcher ein kleineres E-Modul als ein Werkstoff des Anschlagelements (6) aufweist.

2. Rückschlagventil nach Anspruch 1,
**dadurch gekennzeichnet, dass** das Führungselement (5) aus Kunststoff oder Aluminium und das Anschlagelement (6) aus Stahl hergestellt ist.

3. Rückschlagventil nach einem der vorhergehenden Ansprüche, **dadurch gekennzeichnet, dass** das Führungselement (5) als Buchse ausgebildet ist und am Innenumfang wenigstens einen Überströmkanal (7) aufweist.

4. Rückschlagventil nach einem der vorhergehenden Ansprüche, **dadurch gekennzeichnet, dass** das Anschlagelement (6) in das Führungselement (5) eingepresst ist.

5. Rückschlagventil nach einem der vorhergehenden Ansprüche, **dadurch gekennzeichnet, dass** im Anschlagelement (6) eine Kalotte (10) ausgebildet ist.

6. Rückschlagventil nach einem der vorhergehenden Ansprüche, **dadurch gekennzeichnet, dass** das Anschlagelement (6) zwei, drei oder vier verbindungsbereiche zur Verbindung mit dem Führungselement (5) aufweist.

7. Rückschlagventil nach einem der vorhergehenden Ansprüche, **dadurch gekennzeichnet, dass** das Anschlagelement (6) im montierten Zustand an eine Gegenfläche (11) angrenzt, welche an einem Gehäuse des Ventils ausgebildet ist.

8. Rückschlagventil nach einem der vorhergehenden Ansprüche, **dadurch gekennzeichnet, dass** im Führungselement (5) Nuten (8) zur Aufnahme des Anschlagelements (6) ausgebildet sind.

9. Rückschlagventil nach Anspruch 9, **dadurch gekennzeichnet, dass** in den Nuten (8) Aussparungen (9) zur Sicherstellung eines Druckausgleichs ausgebildet sind.

10. Verwendung eines Ventils nach einem der vorhergehenden Ansprüche in einer Hochdruckpumpe zur Förderung von Kraftstoff für ein Speichereinspritzsystem.

## Claims

1. Non-return valve for a pump, comprising a receptacle (2) in which a valve seat (3) is implemented, a closing body (4) and a cage element in which the closing body (4) is disposed, whereby the cage element is bipartite, comprising a guide element (5) and a stop element (6), **characterized in that** the guide element (5) is made from a material having a lower modulus of elasticity than a material of the stop element (6).

2. Non-return valve according to claim 1, **characterized in that** the guide element (5) is made from plastic or aluminium and the stop element (6) from steel.

3. Non-return valve according to one of the preceding claims, **characterized in that** the guide element (5) is implemented as a sleeve and has at least one overflow passage (7) on its inner circumference.

4. Non-return valve according to one of the preceding claims, **characterized in that** the stop element (6) is press-fit into the guide element (5).

5. Non-return valve according to one of the preceding claims, **characterized in that** a spherical indentation (10) is implemented in the stop element (6).

6. Non-return valve according to one of the preceding claims, **characterized in that** the stop element (6) has two, three or four areas of connection to the guide element (5).

7. Non-return valve according to one of the preceding claims, **characterized in that**, in the assembled state, the stop element (6) adjoins a mating surface (11) which is implemented on a valve housing.

8. Non-return valve according to one of the preceding claims, **characterized in that** grooves (8) to accommodate the stop element (6) are implemented in the guide element (5).

9. Non-return valve according to claim 9, **characterized in that** recesses (9) for ensuring pressure compensation are implemented in the grooves (8).

10. Use of a valve according to one of the preceding claims in a high-pressure pump for delivering fuel for a common rail injection system.

## Revendications

1. Clapet anti-retour pour une pompe, comprenant un logement (2) dans lequel est formé un siège de clapet (3), un corps obturateur (4) et un élément formant cage dans lequel le corps obturateur (4) est disposé, l'élément formant cage étant formé de deux pièces, à savoir un élément de guidage (5) et un élément de butée (6), **caractérisé en ce que** l'élément de guidage (5) est fabriqué en une matière qui possède un plus petit module E qu'une matière de l'élément de butée 6.

2. Clapet anti-retour selon la revendication 1, **caractérisé en ce que** l'élément de guidage (5) est fabriqué en matière plastique ou en aluminium et l'élément de butée (6) est fabriqué en acier.

3. Clapet anti-retour selon une des revendications précédentes,**caractérisé en ce que** l'élément de guidage (5) est constitué par une douille et présente au moins un canal de passage (7) au niveau de sa périphérie intérieure.

4. Clapet anti-retour selon une des revendications précédentes, **caractérisé en ce que** l'élément de butée (6) est emmanché à force dans l'élément de guidage (5).

5. Clapet anti-retour selon une des revendications précédentes, **caractérisé en ce qu'**une calotte (10) est formée dans l'élément de butée (6).

6. Clapet anti-retour selon une des revendications précédentes, **caractérisé en ce que** l'élément de butée (6) présente deux, trois ou quatre régions d'assemblage pour l'assemblage avec l'élément de guidage (5).

7. Clapet anti-retour selon une des revendications précédentes, **caractérisé en ce qu'**à l'état monté, l'élément de butée (6) est adjacent à une surface conjuguée (11) qui est formée sur un boîtier du clapet.

8. Clapet anti-retour selon une des revendications précédentes, **caractérisé en ce que** des gorges (8) destinées à recevoir l'élément de butée (6) sont formées dans l'élément de guidage (5).

9. Clapet anti-retour selon la revendication 8, **caractérisé en ce que** des évidements (9) sont formés dans les gorges (8) pour assurer un équilibrage de la pression.

10. Utilisation d'un clapet anti-retour selon une des revendications précédentes dans une pompe à haute pression destinée à l'alimentation de carburant pour un système d'injection à accumulateur.
